(19) Europäisches Patentamt
European Patent Office
Office européen des brevets

(11) **EP 2 874 275 B1**

(12) **EUROPEAN PATENT SPECIFICATION**

(45) Date of publication and mention
of the grant of the patent:
**31.03.2021 Bulletin 2021/13**

(51) Int Cl.:
***H02J 50/00*** (2016.01)    ***H01J 5/16*** (2006.01)
***H02J 50/05*** (2016.01)

(21) Application number: **12880969.6**

(86) International application number:
**PCT/JP2012/067698**

(22) Date of filing: **11.07.2012**

(87) International publication number:
**WO 2014/010044 (16.01.2014 Gazette 2014/03)**

(54) **ELECTROSTATIC-COUPLING CONTACTLESS POWER SUPPLY DEVICE**

KONTAKTLOSE ENERGIEVERSORGUNGSVORRICHTUNG MIT ELEKTROSTATISCHER KOPPLUNG

DISPOSITIF D'ALIMENTATION EN ÉNERGIE ÉLECTRIQUE SANS CONTACT À COUPLAGE ÉLECTROSTATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.05.2015 Bulletin 2015/21**

(73) Proprietor: **FUJI Corporation**
**Chiryu**
**Aichi (JP)**

(72) Inventors:
• **TAKIKAWA, Shinji**
**Chiryu**
**Aichi (JP)**
• **ISHIURA, Naomichi**
**Chiryu**
**Aichi (JP)**

(74) Representative: **Grünecker Patent- und Rechtsanwälte**
**PartG mbB**
**Leopoldstraße 4**
**80802 München (DE)**

(56) References cited:
**WO-A1-2007/063693    WO-A1-2011/043074**
**JP-A- H09 312 942    JP-A- 2003 045 732**
**JP-A- 2009 296 857    JP-A- 2012 085 404**
**US-A- 5 519 262    US-A1- 2012 091 818**

• **LUDOIS D C ET AL: "Capacitive power transfer for slip ring replacement in wound field synchronous machines", ENERGY CONVERSION CONGRESS AND EXPOSITION (ECCE), 2011 IEEE, IEEE, 17 September 2011 (2011-09-17), pages 1664-1669, XP032067376, DOI: 10.1109/ECCE.2011.6063982 ISBN: 978-1-4577-0542-7**

**Description**

Technical Field

The present invention relates to a contactless power supply device that supplies power to an electrical load, which is provided on a movable portion, from a static portion in a contactless manner, and more particularly, to an electrostatic-coupling contactless power supply device in which electrode plates are disposed so as to face each other and be spaced apart from each other.

Background Art

There are a solder printer, a component mounting machine, a reflow machine, a substrate inspection machine, and the like as substrate working machines that produce a substrate on which a plurality of components are mounted. There are many cases in which these machines are connected to each other by a substrate carrying device to construct a substrate production line. Most of these substrate working machines include movable portions that move above a substrate and perform a predetermined operation, and can use linear motor devices as one kind of means for driving the movable portions . Generally, a linear motor device includes a track member in which N poles and S poles of a plurality of magnets are alternately arranged in a line along a moving direction, and a movable portion that includes an armature including a core and coils. In the related art, a deformable power supply cable has been used to supply power to an electrical load that is provided on the movable portion including a linear motor device. Further, the application of a contactless power supply device has been proposed in recent years to solve adverse effects, such as an increase of a load supplied through a power supply cable or a risk of disconnection caused by metal fatigue.

An electromagnetic induction system using a coil has been widely used in the related art as the system of a contactless power supply device. However, an electrostatic-coupling system in which a capacitor is formed by electrode plates facing each other has been used in recent years, and a magnetic field resonance system or the like is has also been examined. The use of a contactless power supply device is not limited to a substrate working machine, and is widely spread to industrial machines for other industries, home appliances, and the like. One example of this kind of contactless power supply device is disclosed in PTL 1.

The power supply device disclosed in PTL 1 includes a power generating unit, a power transmission element, an impedance detecting unit, and a variable matching unit, and has an impedance matching function at a power supply point. Likewise, a power receiving device disclosed in PTL 1 includes a power receiving element, an impedance detecting unit, and a variable matching unit, and has an impedance matching function at a portion connected to a load. Further, a wireless power supply system is formed by the combination of the power supply device and the power receiving device, so that a power loss can be reduced. That is, even though equivalent circuits of the power supply device and the power receiving device are changed due to the change of a relative positional relationship between the power transmission element and the power receiving element or the change of a load, it is possible to maintain high power supply efficiency by the matching of impedance following the change.

Here, when the contactless power supply device is provided in the substrate working machine, the weight of the coil is increased in an electromagnetic induction system and a total weight of the movable portion is increased and a restriction occurs on the structure to avoid magnetic field interfere with the linear motor device. Accordingly, it is considered that an electrostatic-coupling system is excellent. A resonant circuit is generally used in the electrostatic-coupling contactless power supply to ensure a large amount of supplied power. That is, instead of the impedance matching function of PTL 1, the device has a function of variably adjusting the frequency of high-frequency power, which is output from a high-frequency power source circuit of a static portion, and controls the frequency of high-frequency power so that large resonant current flows. Accordingly, even though the position of the movable portion relative to the static portion is changed and a resonant frequency is changed, high power supply efficiency can be maintained.

PTL 2 discloses a supply system for supplying in a contact-free manner electrical energy and data signals to a subscriber module, including a support member, a supply bar mounted on the support member, which supply bar supports primary energy and data interfaces, and at least one bus subscriber module mounted on the support member, which bus subscriber module includes secondary energy and data interfaces arranged adjacent and spaced from the primary energy and data interfaces, respectively, whereby electrical energy and data signals supplied to the primary interfaces are transmitted in a contact-free manner to the secondary interfaces, respectively. According to a capacitive embodiment for compensating for positioning inaccuracies of the components, the supply bar includes a pair of parallel spaced integral projections that extend into corresponding grooves contained in the adjacent face of the bus subscriber module. Primary capacitive interfaces are relatively small plates mounted on the faces of the projections opposite the corresponding relative large secondary capacitive plates mounted on the walls, of the recesses. This arrangement compensates for positioning inaccuracies in the Y and Z directions.

Citation List

Patent Literature

PTL 1: JP-A-2011-223739

PTL 2: US 2012/0091818 A1

Summary of Invention

Technical Problem

Incidentally, in the electrostatic-coupling contactless power supply device provided in the substrate working machine, power supply electrode plates are disposed on the track member of the linear motor device and power receiving electrode plates are disposed on the movable portion. The power supply electrode plates and the power receiving electrode plates face each other so as to be spaced apart from each other, and form capacitors. Contactless power supply is performed by the capacitors. In the case of this structure, there is a concern that the track member is mechanically distorted and a distance between the power supply electrode plate and the power receiving electrode plate is changed due to stress that is generated when the movable portion performs an acceleration/deceleration operation. Further, it is supposed that a distance between the power supply electrode plate and the power receiving electrode plate is changed even when the flatness of a long power supply electrode plate cannot be ensured due to a restriction on mechanical machining accuracy.

When the distance is changed, the capacitance of the capacitor between the electrode plates is changed. If the range of the change of the capacitance is large and the frequency of the change of the capacitance is high, the output frequency of the high-frequency power source circuit deviates from a resonant frequency even though being controlled. For this reason, power supply efficiency tends to be lowered. Furthermore, when the capacitance is reduced by the increase of the distance, a resonant frequency is raised and power supply efficiency is lowered mainly due to the following two reasons. First, when the output frequency of the high-frequency power source circuit is raised in accordance with the resonant frequency, the frequency of a switching operation of a switching element provided therein is increased. Accordingly, the cumulative amount of a power loss, which is generated whenever a switching operation is performed, (switching loss) is increased. Second, high-frequency current flows in a power supply circuit that includes the high-frequency power source circuit to the electrical load, a skin effect is generated, and a power loss (skin loss) caused by the skin effect is increased as much as the frequency.

The invention has been made in consideration of the problem in the related art, and is to provide an electrostatic-coupling contactless power supply device in which the change of the capacitance of an electrostatic-coupling portion (capacitor) is suppressed and high power supply efficiency can be maintained even though the position of a movable portion relative to a static portion is changed.

Solution to Problem

The problem is solved with a substrate working machine according to independent claim 1. Preferred embodiments are set out in the dependent claims. According to an aspect 1 of the present disclosure, there is provided an electrostatic-coupling contactless power supply device including: a plurality of power supply electrode plates that are provided on a static portion; a high-frequency power source circuit that supplies high-frequency power between the plurality of power supply electrode plates; a plurality of power receiving electrode plates that are provided on a movable portion movably mounted on the static portion, facing the plurality of power supply electrode plates so as to be spaced apart from the plurality of power supply electrode plates, respectively, and receives high-frequency power in a contactless manner; and a power receiving circuit that converts the high-frequency power received by the plurality of power receiving electrode plates and supplies the converted high-frequency power to an electrical load provided on the movable portion; and capacitances of a plurality of capacitors, which are formed by the power supply electrode plates and the power receiving electrode plates facing each other so as to be spaced apart from each other, are changed so as to be able to compensate each other when the position of the movable portion relative to the static portion is changed.

According to an aspect 2, in aspect 1, the high-frequency power source circuit variably adjusts an output frequency of the high-frequency power and performs contactless power supply using a resonant circuit, and a change of a resonant frequency of the resonant circuit is suppressed to a small level since the capacitances of the plurality of capacitors compensate each other.

According to an aspect 3, in aspect 1 or 2, the static portion includes two side wall members that extend in parallel with a moving direction of the moving portion; the movable portion moves between the two side wall members of the static portion so as to be spaced apart from inner surfaces of the side wall members; two one-side capacitors are formed by two one-side power supply electrode plates, which are provided on the inner surfaces of the two side wall members of the static portion so as to extend in the moving direction and are electrically connected to one terminal of the high-frequency power source circuit, and two one-side power receiving electrode plates that are provided on both side surfaces of the movable portion and are electrically connected to one terminal of the power receiving circuit; and two other-side capacitors are formed by two other-side power supply electrode plates, which are provided on the inner surfaces of the two side wall members of the static portion so as to extend in the moving direction and are electrically connected to the other terminal of the high-frequency power source circuit, and two other-side power receiving electrode plates that are provided on both the side surfaces of the movable portion and are electrically connected to the other terminal of the power receiving circuit. Further, when the position of the movable portion relative to the two side wall members of the static portion is changed, one of the capacitances of the two one-side capacitors is increased and the other thereof is reduced so that the capacitances of the two one-side capacitors compensate each other and one of the capacitances of the two other-side capacitors is increased and the other thereof is reduced so that the capacitances of the two other-side capacitors compensate each other.

According to an aspect 4, in aspect 1 or 2, the static portion includes a bottom wall member that extends in a moving direction of the moving portion; the movable portion moves above the bottom wall member of the static portion so as to be spaced apart from an upper surface of the bottom wall member; two one-side capacitors are formed by one-side power supply electrode plates, which are provided between the upper surface of the bottom wall member of the static portion and a bottom surface of the movable portion so as to extend in the moving direction and are electrically connected to one terminal of the high-frequency power source circuit, and two one-side power receiving electrode plates that are disposed on upper and lower sides with the one-side power supply electrode plates interposed therebetween and are electrically connected to one terminal of the power receiving circuit; and two other-side capacitors are formed by other-side power supply electrode plates, which are provided between the upper surface of the bottom wall member of the static portion and the bottom surface of the movable portion so as to extend in the moving direction and are electrically connected to the other terminal of the high-frequency power source circuit, and two other-side power receiving electrode plates that are disposed on upper and lower sides with the other-side power supply electrode plates interposed therebetween and are electrically connected to the other terminal of the power receiving circuit. Further, when the position of the movable portion relative to the bottom wall member of the static portion in a vertical direction is changed, one of the capacitances of the two one-side capacitors is increased and the other thereof is reduced so that the capacitances of the two one-side capacitors compensate each other and one of the capacitances of the two other-side capacitors is increased and the other thereof is reduced so that the capacitances of the two other-side capacitors compensate each other.

According to an aspect 5, in aspect 1 or 2, the static portion includes two side wall members that extend in parallel with a moving direction of the moving portion; the movable portion moves between the two side wall members of the static portion so as to be spaced apart from inner surfaces of the side wall members; and two capacitors are formed by two power supply electrode plates, which are provided on the inner surfaces of the two side wall members of the static portion so as to extend in the moving direction, and two power receiving electrode plates that are provided on both side surfaces of the movable portion. Further, when the position of the movable portion relative to the two side wall members of the static portion is changed, one of the capacitances of the two capacitors is increased and the other thereof is reduced so that the capacitances of the two capacitors compensate each other.

According to an invention of aspect 6, in any one of aspects 1 to 5, the movable portion is provided in a substrate working machine that performs a predetermined operation on a substrate.

Advantageous Effects of Invention

In the contactless power supply device according to aspect 1, capacitances of a plurality of capacitors, which are formed by the power supply electrode plates and the power receiving electrode plates facing each other so as to be spaced apart from each other, are changed so as to compensate each other when the position of the movable portion relative to the static portion is changed. Accordingly, the change of the capacitance of the entire power supply circuit is suppressed. Accordingly, since it is possible to suppress the change of the resonant frequency of the entire power supply circuit that includes the high-frequency power source circuit to the electrical load, high power supply efficiency can be maintained.

In aspect 2, the high-frequency power source circuit variably adjusts an output frequency of the high-frequency power and performs contactless power supply using a resonant circuit, and a change of a resonant frequency of the resonant circuit is suppressed to a small level since the capacitances of the plurality of capacitors compensate each other. Accordingly, the output frequency is easily controlled in accordance with the resonant frequency, so that a large difference is not generated between the output frequency and the resonant frequency. As a result, high power supply efficiency can be maintained.

In aspect 3, two one-side capacitors and two other-side capacitors are formed between the two side wall members of the static portion and both side surfaces of the movable portion, and the change of the capacitance of the entire power supply circuit, which includes the high-frequency power source circuit to the electrical load, is suppressed when the position of the movable portion relative to the side wall members is changed. Accordingly, it is possible to suppress the change of the resonant frequency of the power supply circuit when the side wall members are distorted due to stress that is generated when the movable portion performs an acceleration/deceleration operation, when the flatness of a long side wall member cannot be ensured due to a restriction on machining accuracy, or the like. As a result, high power supply efficiency can be maintained.

Moreover, according to quantitative examination, the capacitance of the whole power supply circuit is changed so as to increase when the position of the movable portion relative to the two side wall members deviates from the middle position to any one of the left and right sides. Accordingly, the resonant frequency is changed so as to be lowered, so that the output frequency of the high-frequency power source circuit can be lowered. Therefore, a switching loss can be reduced and a skin loss generated on the power supply circuit by high-frequency current can be reduced. As a result, it is possible to reliably maintain high power supply efficiency that is equal to or higher than a predetermined level.

In aspect 4, two one-side capacitors and two other-side capacitors are formed between the bottom wall member of the static portion and the bottom surface of the movable portion, and the change of the capacitance of the whole power supply circuit, which includes the high-frequency power source circuit to the electrical load, is suppressed when the position of the movable portion relative to the bottom wall member is changed. Accordingly, it is possible to suppress the change of the resonant frequency of the power supply circuit when the bottom wall member is distorted due to stress that is generated when the movable portion performs an acceleration/deceleration operation, when the flatness of a long bottom wall member cannot be ensured due to a restriction on machining accuracy, or the like. As a result, high power supply efficiency can be maintained.

Moreover, according to quantitative examination, the capacitance of the whole power supply circuit is changed so as to increase when the position of the movable portion relative to the bottom wall member deviates from a medium height position to any one of the upper and lower sides. Accordingly, the resonant frequency is changed so as to be lowered, so that the output frequency of the high-frequency power source circuit can be lowered. Therefore, a switching loss can be reduced and a skin loss generated on an electric wire by high-frequency current can be reduced. As a result, it is possible to reliably maintain high power supply efficiency that is equal to or higher than a predetermined level.

In aspect 5, two capacitors are formed between the two side wall members of the static portion and both the side surfaces of the movable portion. Further, when the position of the movable portion relative to the side wall members is changed, one of the capacitances of the two capacitors is increased and the other thereof is reduced so that the capacitances of the two capacitors compensate each other. Accordingly, it is possible to suppress the change of the resonant frequency of the power supply circuit, which includes the high-frequency power source circuit to the electrical load, when the side wall members are distorted due to stress that is generated when the movable portion performs an acceleration/deceleration operation, when the flatness of a long side wall member cannot be ensured due to a restriction on machining accuracy, or the like. As a result, high power supply efficiency can be maintained.

Moreover, according to quantitative examination, the capacitance of the whole power supply circuit is substantially constantly maintained even though the position of the movable portion relative to the bottom wall member deviates from the middle position to any one of the left and right sides. Accordingly, the resonant frequency is hardly changed and the output frequency of the high-frequency power source circuit can be stabilized, so that high power supply efficiency can be reliably maintained.

In aspect 6, the movable portion is provided in a substrate working machine that performs a predetermined operation on a substrate. The electrostatic-coupling contactless power supply device of the invention is provided in the substrate working machine, and can maintain high power supply efficiency. Accordingly, since the contactless power supply device is small, light, and inexpensive, it is possible to contribute to the reduction of the cost of the substrate working machine.

Advantageous Effects of Invention

[Fig. 1] Fig. 1 is a perspective view showing the entire structure of a component mounting machine to which an electrostatic-coupling contactless power supply device according to a first embodiment of the invention can be applied.
[Fig. 2] Fig. 2 is a cross-sectional view schematically showing main parts of the electrostatic-coupling contactless power supply device according to the first embodiment.

[Fig. 3] Fig. 3 is a connection diagram schematically showing the entire structure of the electrostatic-coupling contactless power supply device according to the first embodiment.

[Fig. 4] Fig. 4 is a circuit diagram showing an equivalent circuit of the electrostatic-coupling contactless power supply device according to the first embodiment.

[Fig. 5] Fig. 5 is a circuit diagram in which the equivalent circuit of Fig. 4 is further simplified.

[Fig. 6] Fig. 6 is a view schematically illustrating a case in which the position of a movable portion relative to a static portion is changed.

[Fig. 7] Fig. 7 is a connection diagram schematically showing the entire structure of an electrostatic-coupling contactless power supply device according to a second embodiment.

[Fig. 8] Fig. 8 is a connection diagram schematically showing the entire structure of an electrostatic-coupling contactless power supply device according to a third embodiment.

[Fig. 9] Fig. 9 is a circuit diagram showing an equivalent circuit of the electrostatic-coupling contactless power supply device according to the third embodiment.

[Fig. 10] Fig. 10 is a perspective view schematically showing an electrostatic-coupling contactless power supply device of the related art.

Description of Embodiments

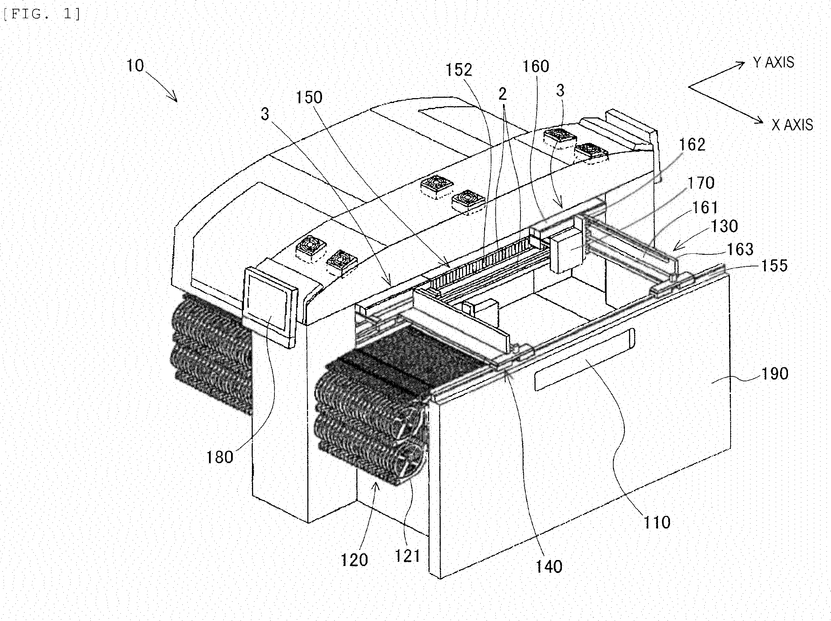

A component mounting machine 10 to which the invention can be applied will be described first with reference to Fig. 1. Fig. 1 is a perspective view showing the entire structure of the component mounting machine 10 to which an electrostatic-coupling contactless power supply device 1 according to a first embodiment of the invention can be applied. The component mounting machine 10 is an apparatus for mounting a plurality of components on a substrate, and includes two sets of component mounting units that have the same structure and are substantially symmetrically disposed. Here, a component mounting unit from which a front right cover of Fig. 1 is removed is illustrated. Meanwhile, the width direction of the component mounting machine 10, which is directed to the front right side from the rear left side in Fig. 1, is referred to as an X-axis direction, and the longitudinal direction of the component mounting machine 10 is referred to as a Y-axis direction.

The component mounting machine 10 has a structure in which a substrate carrying device 110, component supply devices 120, two component transfer devices 130 and 140, and the like are assembled on a machine base 190. The substrate carrying device 110 is disposed so as to cross the vicinity of a longitudinal middle portion of the component mounting machine 10 in the X-axis direction. The substrate carrying device 110 includes a carrying conveyor (not shown), and carries a substrate in the X-axis direction. Further, the substrate carrying device 110 includes a clamp unit (not shown), and fixes and holds a substrate at a predetermined mounting position. The component supply devices 120 are provided at a front portion (a front left side in Fig. 1) and a rear portion (not shown) of the component mounting machine 10 in the longitudinal direction. The component supply devices 120 include a plurality of cassette-type feeders 121, and are configured to continuously supply components to the two component transfer devices 130 and 140 from carrier tapes that are set in the respective feeders 121.

The two component transfer devices 130 and 140 are so-called XY robot-type devices that can move in the X-axis direction and the Y-axis direction. The two component transfer devices 130 and 140 are disposed at the front and rear portions of the component mounting machine 10 in the longitudinal direction so as to face each other. Each of the component transfer devices 130 and 140 includes a linear motor device 150 for movement in the Y-axis direction.

The linear motor device 150 includes a track member 2 and an auxiliary rail 155 that are common to the two component transfer devices 130 and 140, and linear movable portions 3 that are provided for the two component transfer devices 130 and 140, respectively. The track member 2 extends in the Y-axis direction, and includes a bottom wall member 21 and two side wall members 22 and 23. A plurality of magnets 152 are arranged in a line along the Y-axis direction on each of the inner surfaces of the side wall members 22 and 23 that face each other. The linear movable portions 3 are movably mounted on upper edges of the side wall members 22 and 23.

The linear movable portion 3 includes a movable body portion 160, an X-axis rail 161, a mounting head 170, and the like. The movable body portion 160 extends in the Y-axis direction, and armatures, which generate a driving force against the magnets 152 of the track member 151, are disposed on both side surfaces of the movable body portion 160. The X-axis rail 161 extends from the movable body portion 160 in the X-axis direction. One end 162 of the X-axis rail 161 is coupled with the movable body portion 160, and the other end 163 thereof is movably mounted on the auxiliary rail 155. Accordingly, the X-axis rail 161 is configured to move integrally with the movable body portion 160 in the Y-axis direction.

The component mounting head 170 is mounted on the X-axis rail 161 and is configured to move in the X-axis direction. A suction nozzle (not shown) is provided at the lower end of the component mounting head 170. The suction nozzle sucks and picks up a component from the component supply device 120 by using negative pressure, and mounts the component on the substrate that is held at the mounting position. A ball screw feed mechanism (not shown), which is mounted on the X-axis rail 161, includes an X-axis motor that rotationally drives a ball screw, and drives the component mounting head 170 in the X-axis direction. A plurality of electrical components, which are provided on the movable portion 3 to operate the component mounting head 170, correspond to an electrical load 8 of the invention. Meanwhile, the armatures of the linear motor device 150 are also included in the electrical load 8.

In addition, the component mounting machine 10 includes a display setting device 180 that exchanges information with an operator, a camera (not shown) that takes an image of a substrate or a component, and the like.

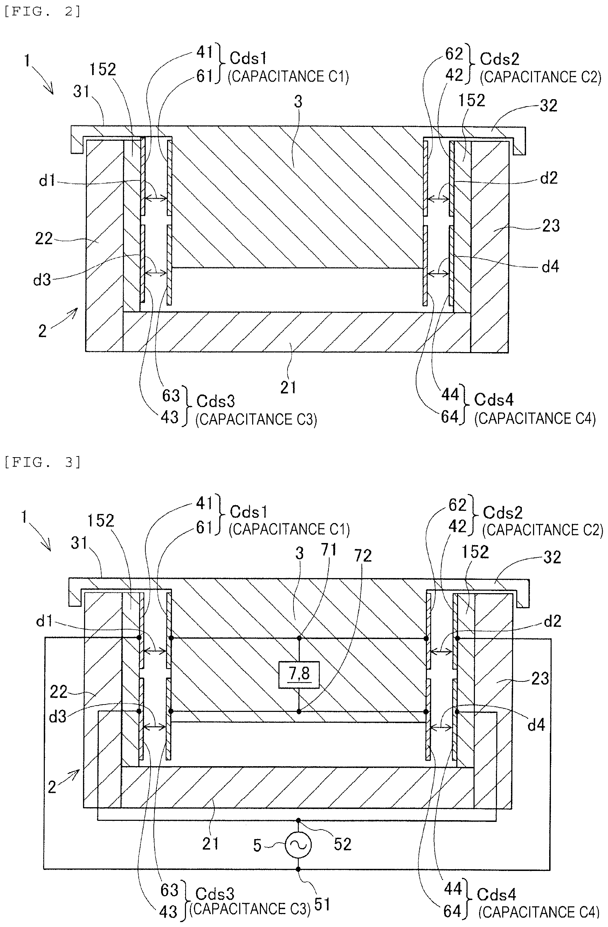

Next, the electrostatic-coupling contactless power supply device 1 according to the first embodiment of the invention will be described with reference to Figs. 2 to 6. Fig. 2 is a cross-sectional view schematically showing main parts of the electrostatic-coupling contactless power supply device 1 according to the first embodiment. Fig. 2 shows the cross-section of the track member 2 and the linear movable portion 3 of the component mounting machine 10 taken along the X-axis direction.

The track member 2 corresponds to a part of the static portion of the invention, and extends in the Y-axis direction (a direction perpendicular to the plane of Fig. 2) that is the moving direction of the linear movable portion 3. The track member 2 includes the bottom wall member 21 that is elongated in the Y-axis direction, and the side wall members 22 and 23 that are raised from both side edges of the bottom wall member 21 and are disposed on both sides of the linear movable portion 3 so as to be parallel to each other. A plurality of magnets 152 are arranged in a line along the Y-axis direction on each of the inner surfaces of the side wall members 22 and 23 that face each other.

Power supply electrode plates 41 to 44 are disposed on upper and lower portions of the inner surfaces of the magnets 152 that are provided on both sides. A total of four power supply electrode plates 41 to 44 have the same shape, have the shape of an elongate belt extending in the Y-axis direction, and are formed of metal plates or the like. In Fig. 2, the electrode plate that is disposed on the upper portion of the inner surface of the left magnet 152 is referred to as one left power supply electrode plate 41, the electrode plate that is disposed on the upper portion of the inner surface of the right magnet 152 is referred to as one right power supply electrode plate 42, the electrode plate that is disposed on the lower portion of the inner surface of the left magnet 152 is referred to as the other left power supply electrode plate 43, and the electrode plate that is disposed on the lower portion of the inner surface of the right magnet 152, is referred to as the other right power supply electrode plate 44.

The linear movable portion 3 corresponds to a movable portion of the invention, and the armatures are not shown in Fig. 2. The linear movable portion 3 includes mounted portions 31 and 32 that extend from the upper portion of the linear movable portion 3 to both sides in the X-axis direction. The mounted portions 31 and 32 are movably mounted on the upper edges of both the side wall members 32 and 33 with linear rolling bearings (not shown) interposed therebetween.

Power receiving electrode plates 61 to 64 are disposed on upper and lower portions of both side surfaces of the linear movable portion 3. A total of four power receiving electrode plates 61 to 64 have the same shape and have the shape of an elongate belt extending in the Y-axis direction. However, the power receiving electrode plates 61 to 64 are shorter than the power supply electrode plates 41 to 44 and are formed of metal plates or the like. In Fig. 2, the electrode plate that is disposed on the upper portion of the left surface of the linear movable portion 3 is referred to as one left power receiving electrode plate 61, the electrode plate that is disposed on the upper portion of the right surface of the linear movable portion is referred to as one right power receiving electrode plate 62, the electrode plate that is disposed on the lower portion of the left surface of the linear movable portion is referred to as the other left power receiving electrode plate 63, and the electrode plate that is disposed on the lower portion of the right surface of the linear movable portion, is referred to as the other right power receiving electrode plate 64.

Here, even though the position of the linear movable portion 3 in the Y-axis direction is changed, one left power supply electrode plate 41 disposed on the side wall member 22 and one left power receiving electrode plate 61 disposed on the linear movable portion 3 face each other so as to be spaced apart from each other and form a first capacitor Cds1. Likewise, the other three sets of the power supply electrode plates 42 to 44 and the power receiving electrode plates 62 to 64 face each other so as to be spaced apart from each other and form second to fourth capacitors Cds2 to Cds4, respectively. In a good state in which the linear movable portion 3 occupies a middle position between the two side wall members 22 and 23, inter-electrode distances d1 to d4 of the respective capacitors Cds1 to Cds4 are equal to a reference inter-electrode distance D (d1=d2=d3=d4=D). Accordingly, in the good state, facing areas S and the inter-electrode distances d1 to d4 of the respective capacitors Cds1 to Cds4 are equal to one another and the respective capacitances C1 to C4 are equal to one another.

Even though the capacitors Cds1 to Cds4 (electrostatic-coupling portions) are superimposed in the spaces of electromagnetic-coupling portions in which the magnets 152 and the armatures of the linear motor device 150 face each other as described above, the capacitors and the electromagnetic-coupling portions do not interfere with each other since electromagnetic coupling and electrostatic coupling are different from each other. If an electromagnetic-coupling contactless power supply device is used, it is necessary to make a power supply coil and a power receiving coil be distant from the magnets 152 and the armatures to avoid the interference between magnetic fields. For this reason, there is a large restriction.

Next, Fig. 3 is a connection diagram schematically showing the entire structure of the electrostatic-coupling contactless power supply device 1 according to the first embodiment. The electrostatic-coupling contactless power supply device 1 includes the above-mentioned four power supply electrode plates 41 to 44, the above-mentioned four power receiving electrode plates 61 to 64, a high-frequency power source circuit 5, a power receiving circuit 7, and the like; and supplies power to the electrical load 8, which is provided on the linear movable portion 3, in a contactless manner. Meanwhile, the power receiving circuit 7 and the electrical load 8 are collectively shown in Fig. 3 as a rectangular block.

The high-frequency power source circuit 5 performs contactless power supply, which uses a resonant circuit, to improve power supply efficiency. The high-frequency power source circuit 5 outputs high-frequency power in the range of, for example, 100 kHz to several MHz. The output voltage of the high-frequency power source circuit 5 can be adjusted, and a sine wave, a rectangular wave, or the like can be exemplified as an output voltage waveform. Coils 55 and 56 are appropriately inserted and connected in the high-frequency power source circuit 5 so that series resonance occurs at an output frequency, and an output frequency itself is also variably adjusted.

The high-frequency power source circuit 5 includes one terminal 51 and the other terminal 52 that output high-frequency power, and the functions of the two terminals 51 and 52 are not different from each other. As shown in Fig. 3, one terminal 51 is electrically connected in parallel to one left power supply electrode plate 41 and one right power supply electrode plate 42. The other terminal 52 is electrically connected in parallel to the other left power supply electrode plate 43 and the other right power supply electrode plate 44.

The power receiving circuit 7 converts high-frequency power, which is received by the power receiving electrode plates 61 to 64, and supplies converted high-frequency power to the electrical load 8. The power receiving circuit 7 is configured in accordance with the power supply specifications of the electrical load 8. For example, a full-wave rectification circuit, an inverter circuit, or the like is used as the power receiving circuit 7. The power receiving circuit 7 includes one terminal 71 and the other terminal 72 that receive high-frequency power, and the functions of the two terminals 71 and 72 are not different from each other. As shown in Fig. 3, one terminal 71 is electrically connected in parallel to one left power receiving electrode plate 61 and one right power receiving electrode plate 62. The other terminal 72 is electrically connected in parallel to the other left power receiving electrode plate 63 and the other right power receiving electrode plate 64.

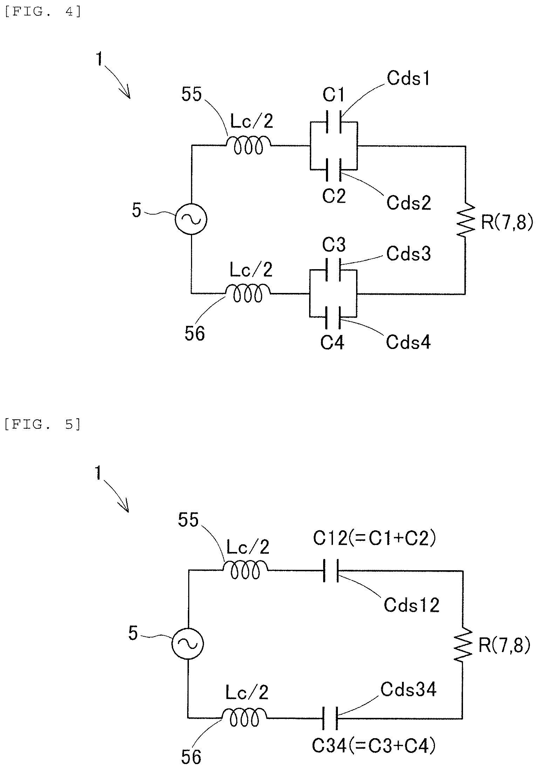

When connecting is performed as described above, the first and second capacitors Cds1 and Cds2 correspond to two one-side capacitors of the invention. Further, the third and fourth capacitors Cds3 and Cds4 correspond to two other-side capacitors of the invention. Accordingly, the entire power supply circuit, which includes the high-frequency power source circuit 5 to the electrical load 8, can be considered so as to be substituted with an equivalent circuit shown in Fig. 4.

Next, the operation and effect of the electrostatic-coupling contactless power supply device 1 according to the first embodiment will be described. Fig. 4 is a circuit diagram showing an equivalent circuit of the electrostatic-coupling contactless power supply device 1 according to the first embodiment, and Fig. 5 is a circuit diagram in which the equivalent circuit of Fig. 4 is further simplified. In Figs. 4 and 5, the power receiving circuit 7 and the electrical load 8 are substituted with a simple pure resistor R. Further, in Fig. 5, the first and second capacitors Cds1 and Cds2 are collectively substituted with an equivalent twelfth capacitor Cds12 and the third and fourth capacitors Cds3 and Cds4 are collectively substituted with an equivalent thirty-fourth capacitor Cds34.

When the device 1 is in a good state, the capacitances C1 to C4 of the respective capacitors Cds1 to Cds4 are obtained from the following expression (1).

$$C1 = C2 = C3 = C4 = \varepsilon S/D \ \ldots \ (1)$$

Here, the facing area between electrodes is denoted by S, the reference inter-electrode distance is denoted by D, and a dielectric constant between the electrodes (the dielectric constant of air) is denoted by $\varepsilon$. Furthermore, in Fig. 5, the capacitance C12 of the equivalent twelfth capacitor Cds12 and the capacitance C34 of the thirty-fourth capacitor Cds34 are obtained from the following expression (2) since two capacitors are connected to each other in parallel.

$$C12 = C1 + C2 = C34 = C3 + C4 = 2C1 = 2\varepsilon S/D \ \ldots \ (2)$$

Here, as known from the circuit diagram shown in Fig. 5, the twelfth capacitor Cds12 and the thirty-fourth capacitor Cds34 are connected to each other in series in the entire power supply circuit. Accordingly, the capacitance $C_{good}$ of the entire power supply circuit and the resonant frequency $f_{good}$ of the power supply circuit are obtained from the following expressions (3) and (4).

$$C_{good}=C12/2=\varepsilon S/D \quad \ldots \quad (3)$$

$$f_{good}=1/\{2\pi(Lc \cdot C_{good})^{0.5}\} \quad \ldots \quad (4)$$

Here, the inductance of the coils 55 and 56 provided in the high-frequency power source circuit 5 is denoted by Lc.

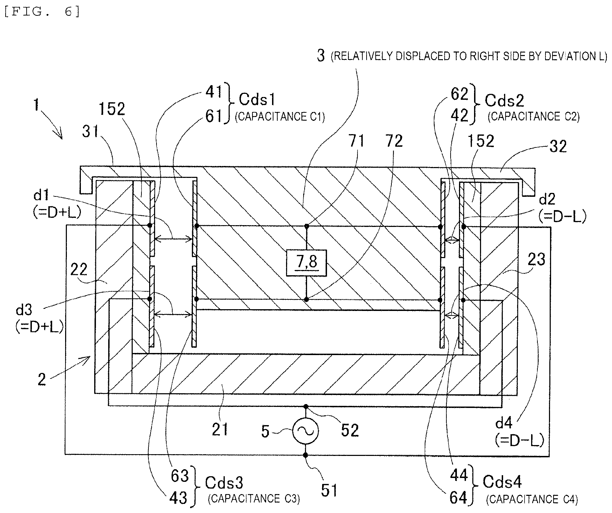

Next, a case, in which the device 1 is not in a good state and the movable portion 3 is displaced relative to the static portion 2, is considered. This case can be generated, for example, when the side wall members 22 and 23 are distorted due to stress generated at the time of the acceleration/deceleration operation of the linear movable portion 3, when the flatness of the long side wall members 22 and 23 cannot be secured due to a restriction on machining accuracy, or the like. Fig. 6 is a view schematically illustrating a case in which the position of the movable portion 3 relative to the static portion 2 is changed. In Fig. 6, the linear movable portion 3 is displaced relative to the two side wall members 22 and 23 from the middle position to the right side by a deviation L. Accordingly, in the first and third capacitors Cds1 and Cds3 that are positioned on the left side in Fig. 6, the inter-electrode distances d1 and d3 become longer than the reference inter-electrode distance D by the deviation L (d1=d3=D+L). Conversely, in the second and fourth capacitors Cds2 and Cds4 that are positioned on the right side in Fig. 6, the inter-electrode distances d2 and d4 become shorter than the reference inter-electrode distance D by the deviation L (d2=d4=D-L).

In this case, the capacitances C1 to C4 of the respective capacitors Cds1 to Cds4 are obtained from the following expressions (5) and (6).

$$C1=C3=\varepsilon S/(D+L) \quad \ldots \quad (5)$$

$$C2=C4=\varepsilon S/(D-L) \quad \ldots \quad (6)$$

The capacitance C1 of the first capacitor Cds1 is reduced by an increase of the denominator of the right side of Expression (5), and the capacitance C2 of the second capacitor Cds2 is increased by the reduction of the denominator of the right side of expression (6). That is, since the capacitances C1 and C2 of the first and second capacitors Cds1 and Cds2 are changed so as to compensate each other, the change of the capacitance C12 of the equivalent twelfth capacitor Cds12 is suppressed. Likewise, since the capacitance C3 of the third capacitor Cds3 is reduced, the capacitance C4 of the fourth capacitor Cds4 is increased, and the capacitances C3 and C4 are changed so as to compensate each other, the change of the capacitance C34 of the equivalent thirty-fourth capacitor Cds34 is suppressed.

Accordingly, as a qualitative effect of the electrostatic-coupling contactless power supply device 1 according to the first embodiment, it is possible to suppress the change of the capacitance C12 of the equivalent twelfth capacitor Cds12 and the change of the capacitance C34 of the equivalent thirty-fourth capacitor Cds34 when the linear movable portion 153 deviates from the middle position. Therefore, the change of the resonant frequency $f_{good}$ is suppressed, so that it is possible to maintain high power supply efficiency.

Further, quantitative examination is continued. The capacitance C12 of the equivalent twelfth capacitor Cds12 and the capacitance C34 of the thirty-fourth capacitor Cds34 are obtained from the following expression (7) on the basis of expressions (5) and (6). C12=C34-C1+C2-2εSD/(D²-L²) ... (7) Furthermore, the capacitance $C_{bad}$ of the entire power supply circuit and the resonant frequency $f_{bad}$ of the power supply circuit at this time are obtained from the following expressions (8) and (9).

$$C_{bad}=C12/2=\varepsilon SD/(D^2-L^2) \quad \ldots \quad (8)$$

$$f_{bad}=1/\{2\pi(Lc \cdot C_{bad})^{0.5}\} \quad \ldots \quad (9)$$

When "L=0" is satisfied in expression (8), the capacitance $C_{bad}$ becomes minimized and is equal to the capacitance $C_{good}$ of expression (3).

That is, as a quantitative effect of the electrostatic-coupling contactless power supply device 1 according to the first embodiment, the capacitance $C_{bad}$ of the entire power supply circuit is changed so as to increase when the linear movable portion 3 deviates from the middle position. At this time, the resonant frequency $f_{bad}$ obtained from the expression (9) is changed to be lowered and the output frequency of the high-frequency power source circuit 5 is lowered. Accordingly, it is possible to reduce the switching loss of the high-frequency power source circuit 5 and to reduce a skin loss that occurs in the power supply circuit due to high-frequency current. As a result, it is possible to reliably maintain high power supply efficiency that is equal to or higher than a predetermined level.

In addition, the electrostatic-coupling contactless power supply device 1 according to the first embodiment is provided in the component mounting machine 10, and can maintain high power supply efficiency. Accordingly, since the contactless power supply device 1 is small, light, and inexpensive, it is possible to contribute to the reduction of the cost of the component mounting machine 10.

Meanwhile, strictly speaking, there also is a case in which the power receiving circuit 7 and the electrical load 8 cannot be substituted with the pure resistor R in the first embodiment. Since Expressions (1) to (7) are satisfied even in this case, a qualitative effect of maintaining high power supply efficiency by suppressing the change of the capacitance $C_{bad}$ of the entire power supply circuit and suppressing the change of the resonant frequency $f_{bad}$ is not changed. Further, it cannot be said that there is not a concern that the linear movable portion 3 may be displaced relative to the bottom wall member 21 of the track member 2 in a vertical direction. In this case, since the capacitances C1 to C4 of the first to fourth capacitors Cds1 to Cds4 are not significantly changed as much as the change of the inter-electrode distances d1 to d4, power supply efficiency is hardly affected.

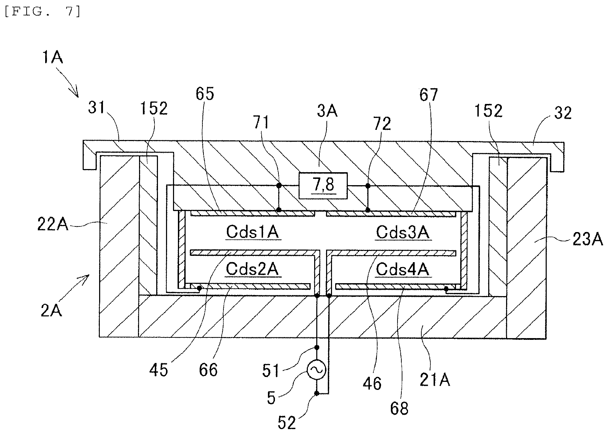

Next, a difference between an electrostatic-coupling contactless power supply device 1A according to a second embodiment and the first embodiment will be mainly described with reference to Fig. 7. Fig. 7 is a connection diagram schematically showing the entire structure of the electrostatic-coupling contactless power supply device 1A according to the second embodiment. The electrostatic-coupling contactless power supply device 1A according to the second embodiment is provided in the component mounting machine 10 as in the first embodiment. As shown in Fig. 7, in the second embodiment, a space, which is larger than the space of the first embodiment, is secured between a bottom wall member 21A of a track member 2A and the bottom of a linear movable portion 3A and electrode plates 45, 46, and 65 to 68 are disposed in this space.

In detail, two power supply electrode plates 45 and 46, which are raised from the bottom wall member 21A and then extend in a horizontal direction, are disposed side by side on the left and right sides in Fig. 7 at a substantially medium height between the upper surface of the bottom wall member 21A of the track member 2A and the bottom of the linear movable portion 3A. The two power supply electrode plates 45 and 46 have symmetrical shapes, extend in a Y-axis direction (a direction perpendicular to the plane of paper), and are formed of metal plates or the like. In Fig. 2, the left electrode plate is referred to as one power supply electrode plate 45 and the right electrode plate is referred to as the other power supply electrode plate 46. Further, electrode plates are not disposed on the inner surfaces of the side wall members 22A and 23A unlike in the first embodiment.

On the other hand, one upper power receiving electrode plate 65 and one lower power receiving electrode plate 66, which are disposed on the upper and lower sides with one power supply electrode plate 45 interposed therebetween in parallel to each other, are provided on the linear movable portion 3A. Likewise, the other upper power receiving electrode plate 67 and the other lower power receiving electrode plate 68, which are disposed on the upper and lower sides with the other power supply electrode plate 46 interposed therebetween in parallel to each other, are provided on the linear movable portion 3A. A total of four power receiving electrode plates 65 to 68 have the same shape and have the shape of an elongate belt that extends in the Y-axis direction. However, the power receiving electrode plates 65 to 68 are shorter than one power supply electrode plate 45 or the other power supply electrode plate 46, and are formed of metal plates or the like.

Here, one power supply electrode plate 45 provided on the bottom wall member 21A and one upper power receiving electrode plate 65 provided on the linear movable portion 3A always face each other so as to be spaced apart from each other and form a first capacitor Cds1A. Further, one power supply electrode plate 45 and one lower power receiving electrode plate 66 always face each other so as to be spaced apart from each other and form a second capacitor Cds2A. Likewise, the other power supply electrode plate 46 and the other upper power receiving electrode plate 67 forms a third capacitor Cds3A, and the other power supply electrode plate 46 and the other lower power receiving electrode plate 68 form a fourth capacitor Cds4A. Since the four capacitors Cds1A to Cds4A have substantially the same facing areas and substantially the same inter-electrode distances, the four capacitors Cds1A to Cds4A have substantially the same capacitance.

Furthermore, one terminal 51 of the high-frequency power source circuit 5 is electrically connected to one power supply electrode plate 45, and the other terminal 52 thereof is electrically connected to the other power supply electrode plate 46. In addition, one terminal 71 of the power receiving circuit 7 is electrically connected in parallel to one upper power receiving electrode plate 65 and one lower power receiving electrode plate 66, and the other terminal 72 thereof is electrically connected in parallel to the other upper power receiving electrode plate 67 and the other lower power receiving electrode plate 68.

In the second embodiment, an electrical equivalent circuit is the same as that of the first embodiment shown in Figs. 4 and 5. When the position of the linear movable portion 3A relative to the bottom wall member 21A is changed from a medium height position in the vertical direction in the second embodiment, the same operation as the operation, which occurs when the relative position of the linear movable portion 3 is changed from the middle position in the left/right direction in the first embodiment, occurs. Accordingly, since the same effect as the effect of the first embodiment is generated even in the second embodiment, it is possible to reliably maintain high power supply efficiency and to contribute to the reduction of the cost of the component mounting machine 10.

Meanwhile, in the second embodiment, it cannot be said that there is not a concern that the linear movable portion 3A may be displaced relative to the side wall members 22A and 23A of the track member 2A in the left/right direction. In this case, since the inter-electrode distances are not changed, the capacitances of the first to fourth capacitors Cds1A to Cds4A are not significantly changed and power supply efficiency is hardly affected.

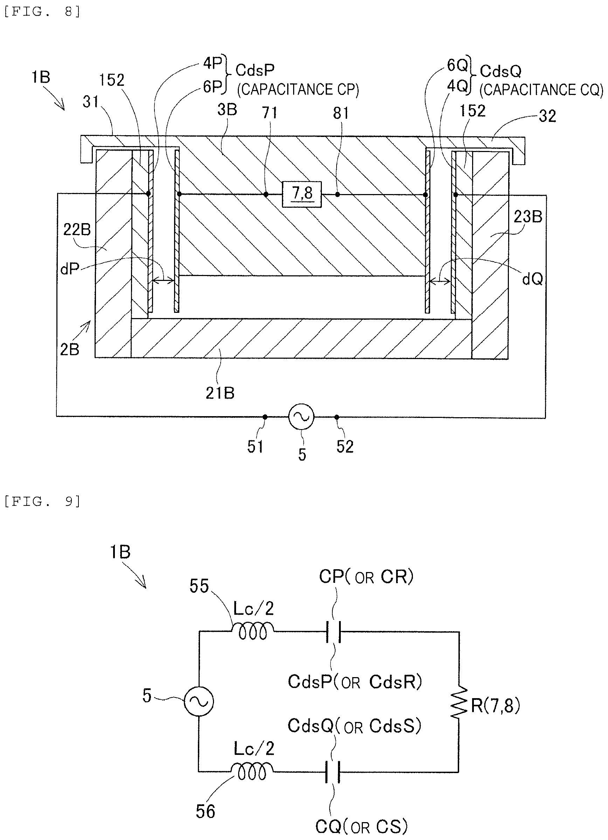

Next, a difference between an electrostatic-coupling contactless power supply device 1B according to a third embodiment and the first embodiment will be mainly described with reference to Figs. 8 and 9. Fig. 8 is a connection diagram schematically showing the entire structure of an electrostatic-coupling contactless power supply device 1B according to a third embodiment. Further, Fig. 9 is a circuit diagram showing an equivalent circuit of the electrostatic-coupling contactless power supply device 1B according to the third embodiment. The electrostatic-coupling contactless power supply device 1B according to the third embodiment is provided in the component mounting machine 10 as in the first embodiment. The electrode plates 4P, 4Q, 6P, and 6Q are simplified in the third embodiment as shown in Figs. 8 and 9, so that two capacitors CdsP and CdsQ are formed.

In detail, power supply electrode plates 4P and 4Q are disposed on inner surfaces of magnets 152 of two side wall members 22B and 23B of a track member 2B, respectively. The two power supply electrode plates 4P and 4Q have the same shape, have the shape of an elongate belt extending in the Y-axis direction, and are formed of metal plates or the like. In Fig. 8, the electrode plate disposed on the inner surface of the left magnet 152 is referred to as one power supply electrode plate 4P and the electrode plate disposed on the inner surface of the right magnet 152 is referred to as the other power supply electrode plate 4Q.

Meanwhile, power receiving electrode plates 6P and 6Q are disposed on both side surfaces of a linear movable portion 3B, respectively. The two power receiving electrode plates 6P and 6Q have the same shape and have the shape of an elongate belt extending in the Y-axis direction. However, the power receiving electrode plates 6P and 6Q are shorter than the power supply electrode plates 4P and 4Q and are formed of metal plates or the like. In Fig. 8, the electrode plate disposed on the left side surface of the linear movable portion 3 is referred to as one power receiving electrode plate 6P, and the electrode plate disposed on the right side surface thereof is referred to as the other power receiving electrode plate 6Q.

Here, even though the position of the linear movable portion 3B in the Y-axis direction is changed, one power supply electrode plate 4P and one power receiving electrode plate 6P always face each other so as to be spaced apart from each other and form a first capacitor CdsP. Likewise, the other power supply electrode plate 4Q and the other power receiving electrode plate 6Q always face each other so as to be spaced apart from each other and form a second capacitor CdsQ.

Further, one terminal 51 of the high-frequency power source circuit 5 is electrically connected to one power supply electrode plate 4P, and the other terminal 52 thereof is electrically connected to the other power supply electrode plate 4Q. Furthermore, one terminal 71 of the power receiving circuit 7 is electrically connected to one power receiving/supply electrode plate 6P, and the other terminal 72 thereof is electrically connected to the other power receiving electrode plate 6Q8. Accordingly, the whole power supply circuit, which includes the high-frequency power source circuit 5 to the electrical load 8, can be considered so as to be substituted with an equivalent circuit shown in Fig. 9.

In a good state in which the linear movable portion 3B occupies a middle position between the two side wall members 22B and 23B, inter-electrode distances dP and dQ of the two capacitors CdsP and CdsQ are equal to a reference inter-electrode distance D (dP=dQ=D). Accordingly, in the good state, the facing area S and the inter-electrode distances dP and dQ of the two capacitors CdsP and CdsQ are equal to each other and two capacitances CP and CQ are equal to values that are obtained from the following expression (10).

$$CP=CQ=\varepsilon S/D \ \ldots \ (10)$$

Further, the capacitance $C_{g2}$ of the whole power supply circuit in this case is obtained from the following expression (11).

$$C_{g2}=CP/2=\varepsilon S/2D \ \ldots \ (11)$$

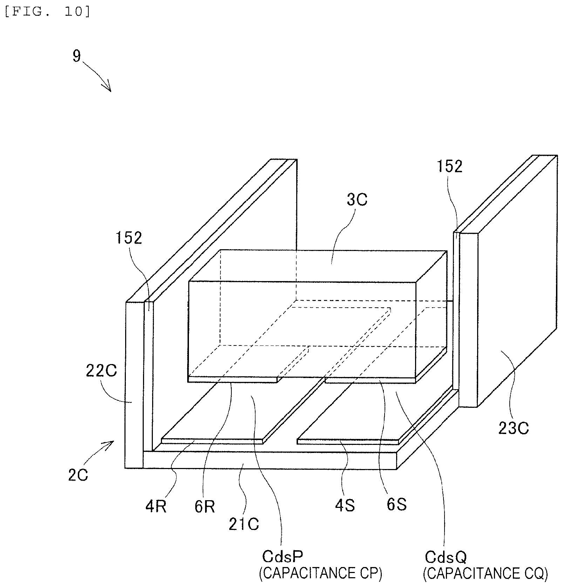

Next, the operation and effect of the electrostatic-coupling contactless power supply device 1B according to the third embodiment will be described through the comparison between the electrostatic-coupling contactless power supply device 1B and the related art. Fig. 10 is a perspective view schematically showing an electrostatic-coupling contactless power supply device 9 of the related art. In Fig. 10, the entire one side wall member 22C of a track member 2C is shown and a part of the other side wall member 23C is not shown. Two power supply electrode plates 4R and 4S are disposed on an upper surface of a bottom wall member 21C of the track member 2C and two power receiving electrode plates 6R and 6S are disposed on the bottom of the linear movable portion 3C in the related art as shown in Fig. 10, so that two capacitors CdsR and CdsS (capacitances CR and CS) are formed. Further, even in the related art, the structure and connection of the high-frequency power source circuit 5 and the power receiving circuit 7 are the same as those in the third embodiment.

Accordingly, an electrical equivalent circuit in the related art is the same as the equivalent circuit of the third embodiment shown in Fig. 9. Here, cases, in which the linear movable portions 3B and 3C are displaced relative to the track members 2B and 2C in the left/right direction and the vertical direction, are considered in the third embodiment and the related art.

First, a case, in which the linear movable portions 3B and 3C are relatively displaced to the right side from a middle position between the two side wall members (22B and 23B, 22C and 23C) by a deviation L, is considered. Then, in the third embodiment, the inter-electrode distance dP of the first capacitor CdsP is increased than the reference inter-electrode distance D by the deviation L (dP=D+L). Conversely, the inter-electrode distance dQ of the second capacitor CdsQ is reduced than the reference inter-electrode distance D by the deviation L (dQ=D-L).

In this case, the capacitances CP and CQ of the two capacitors CdsP and CdsQ are obtained from the following expressions (12) and (13).

$$CP = \varepsilon S / (D+L) \quad \ldots \quad (12)$$

$$CQ = \varepsilon S / (D-L) \quad \ldots \quad (13)$$

In addition, when the capacitance $C_{b2}$ of the whole power supply circuit in this case is obtained from the following expression (14), the capacitance $C_{b2}$ is equal to the capacitance $C_{g2}$ of expression (11) .

$$C_{b2} = (CP \cdot CQ) / (CP+CQ) = \varepsilon S / 2D \quad \ldots \quad (13)$$

That is, in the third embodiment, the two capacitors CdsP and CdsQ are changed so as to compensate each other even though the linear movable portion 3B deviates from a middle position in the left/right direction. Accordingly, the capacitance $C_{b2}$ of the whole power supply circuit is not changed.

On the other hand, in the related art, the inter-electrode distances of the respective capacitors CdsR and CdsS are not changed even though the linear movable portion 3 deviates from a middle position in the left/right direction. Accordingly, the capacitances CR and CS are not significantly changed and power supply efficiency is hardly affected. That is, when the linear movable portions 3B and 3C are relatively displaced in the left/right direction, high power supply efficiency can be maintained both in the third embodiment and in the related art.

Next, a case, in which the linear movable portions 3B and 3C are relatively displaced to the upper side of the bottom wall members 21B and 21C from a medium height position by a deviation H, is considered. Then, in the third embodiment, even though the linear movable portion 3 deviates upward, the inter-electrode distances of the respective capacitors CdSP and CdsQ are not changed. Accordingly, the capacitances CP and CQ are not significantly changed and power supply efficiency is hardly affected.

On the other hand, since each of the inter-electrode distances of the two capacitors CdsR and CdsS is increased by the deviation H in the related art, each of both the capacitances CR and CS is reduced. For this reason, since the resonant frequency of the power supply circuit is increased, an adverse effect in which it is difficult to control the frequency of the high-frequency power source circuit 5 or an adverse effect in which a switching loss and a skin loss are increased is generated. That is, when the linear movable portions 3B and 3C are relatively displaced in the vertical direction, an adverse effect is generated in the related art but an adverse effect is not generated in the third embodiment.

Further, even though the position of the linear movable portion 3B relative to the side wall members 22B and 23B deviates to any one of the left and right sides from the middle position in the third embodiment, the capacitance $C_{b2}$ of the whole power supply circuit is substantially constantly maintained. Accordingly, the resonant frequency is hardly changed and the output frequency of the high-frequency power source circuit 5 can be stabilized, so that high power supply efficiency can be reliably maintained. Furthermore, it is possible to contribute to the reduction of the cost of the component mounting machine 10.

Meanwhile, in the first embodiment, the capacitance C12 of the equivalent twelfth capacitor Cds12 is always equal to the capacitance C34 of the equivalent thirty-fourth capacitor Cds34 as expressed in expression (7) when the linear movable portion 3 is displaced relative to the track member 2. This means that a forward path from one terminal 51 of the high-frequency power source circuit 5 to one terminal 71 of the power receiving circuit 7 is balanced with a return path from the other terminal 72 of the power receiving circuit 7 to the other terminal 52 of the high-frequency power source circuit 5 in terms of electrical characteristics. That is, since power can always be supplied by a balanced circuit, an effect, such as high stability of power supply against disturbance, is generated. The effect of this balanced circuit is also generated in the second embodiment, and is not generated in the third embodiment.

Further, the shapes and dispositions of the power supply electrode plates 41, 46, 4P, and 4Q and the power receiving electrode plates 61 to 68, 6P, and 6Q of the first to third embodiments are exemplary, and other embodiments can also be employed. For example, plural sets of electrode plates having an L- shaped cross - section may face each other so as to be spaced apart from each other. Furthermore, drive mechanism for each of the movable portions 3, 3A, and 3B does not need to be the linear motor device 150, and may be, for example, a well-known ball screw feed mechanism. The invention may additionally have various applications or modifications.

Industrial Applicability

The electrostatic-coupling contactless power supply device of the invention can be used in a substrate working machine including a component mounting machine, and can also be widely used in various other industrial machines which include movable portions and to which power is required to be supplied in a contactless manner.

Reference Signs List

1, 1A, 1B: electrostatic-coupling contactless power supply device
2, 2A, 2B, 2C: track member (static portion)

21, 21A, 21B, 21C: bottom wall member
22, 22A, 22B, 22C: side wall member
23, 23A, 23B, 23C: side wall member

3, 3A, 3B, 3C: linear movable portion (movable portion)
41: one left power supply electrode plate 42: one right power supply electrode plate 43: the other left power supply electrode plate 44: the other right power supply electrode plate 45: one power supply electrode plate 46: the other power supply electrode plate 4P: one power supply electrode plate 4Q: the other power supply electrode plate
5: high-frequency power source circuit 55, 56: coil
61: one left power receiving electrode plate 62: one right power receiving electrode plate 63: the other left power receiving electrode plate 64: the other right power receiving electrode plate 65: one upper power receiving electrode plate 66: lower one-side power receiving electrode plate 67: upper other-side power receiving electrode plate 68: the other lower power receiving electrode plate 6P: one power receiving electrode plate 6Q the other power receiving electrode plate
7: power receiving circuit
8: electrical load
9: electrostatic-coupling contactless power supply device in the related art
10: component mounting machine
110: substrate carrying device 120: component supply device 130, 40: component transfer device 150: linear motor device 160: movable body portion 161: X-axis rail 170: mounting head 180: display setting device 190: machine base d1 to d4, dP, dQ: inter-electrode distance L: deviation Cds1 to Cds4: first to fourth capacitors Cds12, Cds34: equivalent twelfth and thirty-fourth capacitors Cds1A to Cds14: first to fourth capacitors CdsP: first capacitor CdsQ: second capacitor Lc: inductance

**Claims**

**1.** A substrate working machine (10) for performing predetermined work on a substrate and that comprises a static portion (2, 2A, 2B, 2C), a movable portion (3, 3A, 3B, 3C) movably mounted on the static portion, means for driving the movable portion using a linear motor device or a ball screw feed mechanism, and an electrostatic-coupling contactless power supply device (1, 1A, 1B) comprising:

a plurality of power supply electrode plates (41, 42, 43, 44, 45, 46, 4P, 4Q) that are provided on the static portion; a high-frequency power source circuit (5) that is configured to supply high-frequency power between the plurality of power supply electrode plates;

a plurality of power receiving electrode plates (61, 62, 63, 64, 65, 66, 67, 68, 6P, 6Q) that are provided on the movable portion, face the plurality of power supply electrode plates so as to be spaced apart from the plurality of power supply electrode plates, respectively, and are configured to receive high-frequency power in a contactless manner; and

a power receiving circuit (7) that is configured to convert the high-frequency power received by the plurality of power receiving electrode plates and is configured to supply the converted high-frequency power to an electrical load (8) provided on the movable portion,

wherein, capacitances of a plurality of capacitors, which are formed by the power supply electrode plates and the power receiving electrode plates facing each other so as to be spaced apart from each other, are changed so as to compensate each other and thus suppress a change of a resonant frequency of a resonant circuit when the position of the movable portion relative to the static portion is changed, and

**characterized in that** the high-frequency power source circuit is configured to variably adjust an output frequency of the high-frequency power in accordance with the resonant frequency and configured to suppress a difference generated between the output frequency and the resonant frequency and configured to perfom contactless power supply using the resonant circuit.

2. The substrate working machine according to claim 1,
wherein the static portion includes two side wall members that extend in parallel with a moving direction of the moving portion,
the movable portion is configured to move between the two side wall members of the static portion so as to be spaced apart from inner surfaces of the side wall members,
two one-side capacitors are formed by two one-side power supply electrode plates, which are provided on the inner surfaces of the two side wall members of the static portion so as to extend in the moving direction and are electrically connected to one terminal of the high-frequency power source circuit, and two one-side power receiving electrode plates that are provided on both side surfaces of the movable portion and are electrically connected to one terminal of the power receiving circuit,
two other-side capacitors are formed by two other-side power supply electrode plates, which are provided on the inner surfaces of the two side wall members of the static portion so as to extend in the moving direction and are electrically connected to the other terminal of the high-frequency power source circuit, and two other-side power receiving electrode plates that are provided on both the side surfaces of the movable portion and are electrically connected to the other terminal of the power receiving circuit, and
when the position of the movable portion relative to the two side wall members of the static portion is changed, one of capacitances of the two one-side capacitors is increased and the other thereof is reduced so that the capacitances of the two one-side capacitors compensate each other and one of capacitances of the two other-side capacitors is increased and the other thereof is reduced so that the capacitances of the two other-side capacitors compensate each other.

3. The substrate working machine according to claim 1,
wherein the static portion includes a bottom wall member that extends in a moving direction of the moving portion,
the movable portion is configured to move above the bottom wall member of the static portion so as to be spaced apart from an upper surface of the bottom wall member,
two one-side capacitors are formed by one-side power supply electrode plates, which are provided between the upper surface of the bottom wall member of the static portion and the bottom surface of the movable portion so as to extend in the moving direction and are electrically connected to one terminal of the high-frequency power source circuit, and two one-side power receiving electrode plates that are disposed on upper and lower sides with the one-side power supply electrode plates interposed therebetween and are electrically connected to one terminal of the power receiving circuit,
two other-side capacitors are formed by other-side power supply electrode plates, which are provided between the upper surface of the bottom wall member of the static portion and the bottom surface of the movable portion so as to extend in the moving direction and are electrically connected to the other terminal of the high-frequency power source circuit, and two other-side power receiving electrode plates that are disposed on upper and lower sides with the other-side power supply electrode plates interposed therebetween and are electrically connected to the other terminal of the power receiving circuit, and

when the position of the movable portion relative to the bottom wall member of the static portion in a vertical direction is changed, one of capacitances of the two one-side capacitors is increased and the other thereof is reduced so that the capacitances of the two one-side capacitors compensate each other and one of capacitances of the two other-side capacitors is increased and the other thereof is reduced so that the capacitances of the two other-side capacitors compensate each other.

4.  The substrate working machine according to claim 1,

wherein the static portion includes two side wall members that extend in parallel with a moving direction of the moving portion, the movable portion is configured to move between the two side wall members of the static portion so as to be spaced apart from inner surfaces of the side wall members, two capacitors are formed by two power supply electrode plates, which are provided on the inner surfaces of the two side wall members of the static portion so as to extend in the moving direction, and two power receiving electrode plates that are provided on both side surfaces of the movable portion, and

when the position of the movable portion relative to the two side wall members of the static portion is changed, one of capacitances of the two capacitors is increased and the other thereof is reduced so that the capacitances of the two capacitors compensate each other.

**Patentansprüche**

1.  Maschine (10) zum Bearbeiten eines Substrats, mit der ein vorgegebener Bearbeitungsvorgang an einem Substrat durchgeführt wird und die einen statischen Abschnitt (2, 2A, 2B, 2C), einen beweglichen Abschnitt (3, 3A, 3B, 3C), der beweglich an dem statischen Abschnitt angebracht ist, eine Einrichtung zum Antreiben des beweglichen Abschnitts unter Verwendung einer Linearmotor-Vorrichtung oder eines Kugelgewinde-Vorschubmechanismus sowie eine elektrostatisch koppelnde, kontaktlose Stromversorgungsvorrichtung (1, 1A, 1B) umfasst:

eine Vielzahl von Stromversorgungs-Elektrodenplatten (41, 42, 43, 44, 45, 46, 4P, 4Q), die an dem statischen Abschnitt vorhanden sind;
eine Hochfrequenzstrom-Quellenschaltung (5), die so ausgeführt ist, dass sie Hochfrequenzstrom zwischen der Vielzahl von Stromversorgungs-Elektrodenplatten zuführt;
eine Vielzahl von Stromempfangs-Elektrodenplatten (61, 62, 63, 64, 65, 66, 67, 68, 6P, 6Q), die an dem beweglichen Abschnitt vorhanden sind, der Vielzahl von Stromversorgungs-Elektrodenplatten so gegenüberliegen, dass sie jeweils von der Vielzahl von Stromversorgungs-Elektrodenplatten beabstandet sind, und so ausgeführt sind, dass sie Hochfrequenzstrom kontaktlos aufnehmen; sowie
eine Stromempfangs-Schaltung (7), die so ausgeführt ist, dass sie den durch die Vielzahl von Stromempfangs-Elektrodenplatten empfangenen Hochfrequenzstrom umwandelt, und so ausgeführt ist, dass sie den umgewandelten Hochfrequenzstrom einer elektrischen Last (8) zuführt, die an dem beweglichen Abschnitt vorhanden ist,
wobei
Kapazitäten einer Vielzahl von Kondensatoren, die durch die Stromversorgungs-Elektrodenplatten und die Stromempfangs-Elektrodenplatten gebildet werden, die einander so gegenüberliegen, dass sie voneinander beabstandet sind, so verändert werden, dass sie einander kompensieren und somit eine Änderung einer Resonanzfrequenz eines Resonanzkreises unterdrücken, wenn die Position des beweglichen Abschnitts relativ zu dem statischen Abschnitt geändert wird, und
**dadurch gekennzeichnet, dass** die Hochfrequenzstrom-Quellenschaltung so ausgeführt ist, dass sie eine Ausgangsfrequenz des Hochfrequenzstroms entsprechend der Resonanzfrequenz variabel reguliert, und so ausgeführt ist, dass sie eine zwischen der Ausgangsfrequenz und der Resonanzfrequenz erzeugte Differenz unterdrückt, und so ausgeführt ist, dass sie kontaktlose Stromversorgung unter Verwendung des Resonanzkreises durchführt.

2.  Maschine zum Bearbeiten eines Substrats nach Anspruch 1,

wobei der statische Abschnitt zwei Seitenwandelemente umfasst, die sich parallel zu einer Bewegungsrichtung des sich bewegenden Abschnitts erstrecken,
der bewegliche Abschnitt so ausgeführt ist, dass er sich zwischen den zwei Seitenwandelementen des statischen Abschnitts so bewegt, dass er von den Innenflächen der Seitenwandelemente beabstandet ist,
zwei Kondensatoren einer Seite durch zwei Stromversorgungs-Elektrodenplatten einer Seite, die an den Innenflächen der zwei Seitenwandelemente des statischen Abschnitts so vorhanden sind, dass sie sich in der Bewegungsrichtung erstrecken, und die elektrisch mit einem Anschluss der Hochfrequenzstrom-Quellenschaltung verbunden sind, sowie zwei Stromempfangs-Elektrodenplatten einer Seite gebildet werden, die an beiden Seitenflächen des beweglichen Abschnitts vorhanden sind und elektrisch mit einem Anschluss der Stromempfangs-Schaltung verbunden sind, und

zwei Kondensatoren einer anderen Seite durch zwei Stromversorgungs-Elektrodenplatten einer anderen Seite, die an den Innenflächen der zwei Seitenwandelemente des statischen Abschnitts so vorhanden sind, dass sie sich in der Bewegungsrichtung erstrecken, und die elektrisch mit dem anderen Anschluss der Hochfrequenzstrom-Quellenschaltung verbunden sind, sowie zwei Stromempfangs-Elektrodenplatten einer anderen Seite gebildet werden, die an den beiden Seitenflächen des beweglichen Abschnitts vorhanden sind und elektrisch mit dem anderen Anschluss der Stromempfangs-Schaltung verbunden sind, und

wenn die Position des beweglichen Abschnitts relativ zu den zwei Seitenwandelementen des statischen Abschnitts geändert wird, eine von Kapazitäten der zwei Kondensatoren einer Seite vergrößert und die andere derselben verringert wird, so dass die Kapazitäten der zwei Kondensatoren einer Seite einander kompensieren, und eine von Kapazitäten der zwei Kondensatoren einer anderen Seite vergrößert wird und die andere derselben verringert wird, so dass die Kapazitäten der zwei Kondensatoren einer anderen Seite einander kompensieren.

3. Maschine zum Bearbeiten eines Substrats nach Anspruch 1,
wobei der statische Abschnitt ein Bodenwandelement umfasst, das sich in einer Bewegungsrichtung des sich bewegenden Abschnitts erstreckt,
der bewegliche Abschnitt so ausgeführt ist, dass er sich oberhalb des Bodenwandelementes des statischen Abschnitts so bewegt, dass er von einer oberen Fläche des Bodenwandelementes beabstandet ist,
zwei Kondensatoren einer Seite durch Stromversorgungs-Elektrodenplatten einer Seite, die zwischen der oberen Fläche des Bodenwandelementes des statischen Abschnitts und der Bodenfläche des beweglichen Abschnitts so vorhanden sind, dass sie sich in der Bewegungsrichtung erstrecken, und die elektrisch mit einem Anschluss der Hochfrequenzstrom-Quellenschaltung verbunden sind, sowie zwei Stromempfangs-Elektrodenplatten einer Seite gebildet werden, die an der oberen und der unteren Seite so angeordnet sind, dass die Stromversorgungs-Elektrodenplatten einer Seite zwischen ihnen angeordnet sind, und die elektrisch mit einem Anschluss der Stromempfangs-Schaltung verbunden sind,
zwei Kondensatoren einer anderen Seite durch Stromversorgungs-Elektrodenplatten einer anderen Seite, die zwischen der oberen Fläche des Bodenwandelementes des statischen Abschnitts und der Bodenfläche des beweglichen Abschnitts so vorhanden sind, dass sie sich in der Bewegungsrichtung erstrecken, und die elektrisch mit dem anderen Anschluss der Hochfrequenzstrom-Quellenschaltung verbunden sind, sowie zwei Stromempfangs-Elektrodenplatten einer anderen Seite gebildet werden, die an der oberen und der unteren Seite so angeordnet sind, dass die Stromversorgungs-Elektrodenplatten der anderen Seite zwischen ihnen angeordnet sind, und die elektrisch mit dem anderen Anschluss der Stromempfangs-Schaltung verbunden sind,
wenn die Position des beweglichen Abschnitts relativ zu dem Bodenwandelement des statischen Abschnitts in einer vertikalen Richtung geändert wird, eine von Kapazitäten der zwei Kondensatoren einer Seite vergrößert und die andere derselben verringert wird, so dass die Kapazitäten der zwei Kondensatoren einer Seite einander kompensieren, und eine von Kapazitäten der zwei Kondensatoren einer anderen Seite vergrößert wird und die andere derselben verringert wird, so dass die Kapazitäten der zwei Kondensatoren einer anderen Seite einander kompensieren.

4. Maschine zum Bearbeiten eines Substrats nach Anspruch 1,
wobei der statische Abschnitt zwei Seitenwandelemente umfasst, die sich parallel zu einer Bewegungsrichtung des sich bewegenden Abschnitts erstrecken,
der bewegliche Abschnitt so ausgeführt ist, dass er sich zwischen den zwei Seitenwandelementen des statischen Abschnitts so bewegt, dass er von den Innenflächen der Seitenwandelemente beabstandet ist,
zwei Kondensatoren durch zwei Stromversorgungs-Elektrodenplatten, die an den Innenflächen der zwei Seitenwandelemente des statischen Abschnitts so vorhanden sind, dass sie sich in der Bewegungsrichtung erstrecken, sowie zwei Stromempfangs-Elektrodenplatten gebildet werden, die an beiden Seitenflächen des beweglichen Abschnitts vorhanden sind, und
wenn die Position des beweglichen Abschnitts relativ zu den zwei Seitenwandelementen des statischen Abschnitts geändert wird, eine von Kapazitäten der zwei Kondensatoren vergrößert und die andere desselben verringert wird, so dass die Kapazitäten der zwei Kondensatoren einander kompensieren.

**Revendications**

1. Machine d'usinage de substrat (10) destinée à effectuer un usinage prédéterminé sur un substrat et qui comprend une partie statique (2, 2A, 2B, 2C), une partie mobile (3, 3A, 3B, 3C) montée tout en pouvant bouger sur la partie statique, un moyen d'entraînement de la partie mobile en utilisant un composant formant moteur linéaire ou un mécanisme d'avance par vis à billes, ainsi qu'un dispositif d'alimentation sans contact à couplage électrostatique (1, 1A, 1B), comprenant :

   une pluralité de plaques d'électrodes d'alimentation (41, 42, 43, 44, 45, 46, 4P, 4Q) qui sont disposées sur la partie statique,
   un circuit de source d'alimentation haute fréquence (5) qui est configuré pour fournir de l'énergie à haute fréquence entre les différentes plaques d'électrodes d'alimentation,
   une pluralité de plaques d'électrodes de réception d'énergie (61, 62, 63, 64, 65, 66, 67, 68, 6P, 6Q) qui sont disposées sur la partie mobile, en faisant face à la pluralité de plaques d'électrodes d'alimentation de sorte à être écartées respectivement de la pluralité de plaques d'électrodes d'alimentation, et qui sont configurées pour recevoir sans contact de l'énergie à haute fréquence, et
   un circuit de réception d'énergie (7) qui est configuré pour convertir l'énergie à haute fréquence reçue par la pluralité de plaques d'électrodes de réception d'énergie et qui est configuré pour délivrer l'énergie à haute fréquence convertie à une charge électrique disposée sur la partie mobile,
   dans lequel les capacités d'une pluralité de condensateurs, qui sont formés par les plaques d'électrodes d'alimentation et les plaques d'électrodes de réception d'énergie se faisant face de sorte à être écartées les unes des autres, sont modifiées de sorte à se compenser l'une l'autre et ainsi supprimer tout changement de la fréquence de résonance d'un circuit résonnant lorsque la position de la partie mobile par rapport à la partie statique est modifiée, et
   **caractérisé en ce que** le circuit de source d'énergie à haute fréquence est configuré pour ajuster de manière variable la fréquence de sortie de l'énergie à haute fréquence en fonction de la fréquence de résonance, et configuré pour supprimer la différence générée entre la fréquence de sortie et la fréquence de résonance, ainsi que configuré pour effectuer une alimentation sans contact en utilisant le circuit résonnant.

2. Machine d'usinage de substrat selon la revendication 1,
   dans laquelle la partie statique inclut deux éléments de parois latérales qui s'étendent parallèlement à la direction de déplacement de la partie mobile,
   la partie mobile est configurée pour se déplacer entre les deux parois latérales de la partie statique de sorte à ce qu'elles soient espacées des surfaces internes des parois latérales,
   deux condensateurs sur un premier côté sont formés par deux plaques d'électrodes d'alimentation sur un premier côté qui sont disposées sur les surfaces internes des deux parois latérales de la partie statique de sorte à s'étendre dans la direction de déplacement, et qui sont reliées électriquement à une borne du circuit de source d'alimentation à haute fréquence, et par deux plaques d'électrodes de réception d'énergie sur un côté qui sont disposées sur les deux surfaces latérales de la partie mobile et sont reliées électriquement à une borne du circuit de réception d'énergie,
   deux condensateurs sur l'autre côté sont formés par deux plaques d'électrodes d'alimentation sur l'autre côté qui sont disposées sur les surfaces internes des deux parois latérales de la partie statique de sorte à s'étendre dans la direction de déplacement, et qui sont reliées électriquement à l'autre borne du circuit de source d'alimentation à haute fréquence, et par deux plaques d'électrodes de réception d'énergie sur l'autre côté qui sont disposées sur les deux surfaces latérales de la partie mobile et sont reliées électriquement à l'autre borne du circuit de réception d'énergie, et
   lorsque la position de la partie mobile par rapport aux deux parois latérales de la partie statique est modifiée, l'une des capacités des deux condensateurs sur un premier côté est augmentée alors que l'autre capacité de ceux-ci est réduite de sorte à ce que les capacités des deux condensateurs sur un premier côté se compensent, et l'une des capacités des deux condensateurs de l'autre côté est augmentée alors que l'autre capacité de ceux-ci est réduite de sorte à ce que les capacités des deux condensateurs de l'autre côté se compensent.

3. Machine d'usinage de substrat selon la revendication 1,
   dans laquelle la partie statique inclut un élément de paroi de fond qui s'étend dans la direction de déplacement de la partie mobile,
   la partie mobile est configurée pour se déplacer au-dessus de la paroi de fond de la partie statique de sorte à être écarté de la surface supérieure de la paroi de fond,
   deux condensateurs sur un premier côté sont formés par des plaques d'électrodes d'alimentation sur un premier côté qui sont disposées entre la surface supérieure de la paroi de fond de la partie statique et la surface de fond de la partie mobile de sorte à s'étendre dans la direction de déplacement, et qui sont reliées électriquement à une borne du circuit de source d'énergie à haute fréquence, et par deux plaques d'électrodes de réception d'énergie sur un premier côté qui sont disposées sur les côtés supérieur et inférieur, les plaques d'électrodes d'alimentation sur un premier côté étant intercalées entre ceux-ci et étant reliées électriquement à une borne du circuit de réception d'énergie,

deux condensateurs sur l'autre côté sont formés par des plaques d'électrodes d'alimentation sur l'autre côté qui sont disposées entre la surface supérieure de la paroi de fond de la partie statique et la surface de fond de la partie mobile de sorte à s'étendre dans la direction de déplacement, et qui sont reliées électriquement à l'autre borne du circuit de source d'énergie à haute fréquence, et par deux plaques d'électrodes de réception d'énergie sur l'autre côté qui sont disposées sur les côtés supérieur et inférieur, les plaques d'électrodes d'alimentation sur l'autre côté étant intercalées entre ceux-ci et étant reliées électriquement à l'autre borne du circuit de réception d'énergie, et lorsque la position de la partie mobile par rapport à la paroi de fond de la partie statique dans la direction verticale est modifiée, l'une des capacités des deux condensateurs sur un premier côté est augmentée alors que l'autre capacité de ceux-ci est réduite de sorte à ce que les capacités des deux condensateurs sur un premier côté se compensent, et l'une des capacités des deux condensateurs sur l'autre côté est augmentée alors que l'autre capacité de ceux-ci est réduite de sorte à ce que les capacités des deux condensateurs sur l'autre côté se compensent.

4. Machine d'usinage de substrat selon la revendication 1,
dans laquelle partie statique inclut deux éléments formant parois latérales qui s'étendent parallèlement à la direction de déplacement de la partie mobile
la partie mobile est configurée pour se déplacer entre les deux parois latérales de la partie statique de sorte à ce qu'elles soient espacées des surfaces internes des parois latérales,
deux condensateurs sont formés par deux plaques d'électrodes d'alimentation qui sont disposées sur les surfaces internes des deux parois latérales de la partie statique de sorte à s'étendre dans la direction de déplacement, et par deux plaques d'électrodes de réception d'énergie qui sont disposées sur les deux surfaces latérales de la partie mobile, et
lorsque la position de la partie mobile par rapport aux deux parois latérales de la partie statique est modifiée, l'une des capacités des deux condensateurs est augmentée alors que l'autre capacité de ceux-ci est réduite de sorte à ce que les capacités des deux condensateurs se compensent.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

9

**EP 2 874 275 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011223739 A
- US 20120091818 A1